# EUROPEAN PATENT SPECIFICATION

(11) **EP 0 865 814 B1**
(45) Date of publication and mention of the grant of the patent: **02.07.2003**
(21) Application number: 98102875.6
(22) Date of filing: 19.02.1998
(51) Int. Cl.: B01D 53/46, B01D 53/68, B01D 53/86

(54) **Cleaning agent and cleaning process for harmful gas**
Reinigungsmittel und Reinigungsverfahren für schädliche Gase
Agent de purification et procédé de purification pour gaz nocifs

(30) Priority: 26.02.1997 JP 5840797
(43) Date of publication of application: 23.09.1998
(73) Proprietor: JAPAN PIONICS CO., LTD., Minato-ku, Tokyo 105 (JP)
(72) Inventor: Fukuda, Hideki, c/o Japan Pionics Co., Ltd., Hiratsuka-shi, Kanagawa-ken (JP); Otsuka, Kenji, c/o Japan Pionics Co., Ltd., Hiratsuka-shi, Kanagawa-ken (JP); Arakawa, Satoshi, c/o Japan Pionics Co., Ltd., Hiratsuka-shi, Kanagawa-ken (JP); Koura, Hisao, c/o Japan Pionics Co., Ltd., Hiratsuka-shi, Kanagawa-ken (JP)
(74) Representative: Gille Hrabal Struck Neidlein Prop Roos

(56) References cited:
- EP-A- 0 309 099
- EP-A- 0 429 053
- EP-A- 0 474 559
- EP-A- 0 625 368

## Description

### BACKGROUND OF THE INVENTION

### 1. Field of the Invention

The present invention relates to a cleaning agent for a harmful gas and a process for cleaning the harmful gas. More particularly, it pertains to a cleaning agent for a hydride harmful gas which is used in the manufacture of a semiconductor , and to a process for cleaning the above-mentioned harmful gas by the use of said cleaning agent.

### 2. Description of the Related Arts.

With continuous development in semiconductor industry and liquid crystal industry, there has been in recent years a steady remarkable rise in the kinds and use amounts of hydride series qases such as arsine, phosphine, silane and diborane that are used in the processes of the above-mentioned industries.

These hydride series gases are each indispensable as a raw material gas or a doping gas in the production processes of a silicon semiconductor, a compound semiconductor and liquid crystal. However, each of the gases is highly toxic, and it is prescribed that the threshold limit values in time weighted average ( TLV-TWA ) be 0.05 ppm for arsine ( AsH₃ ), 0.3 ppm for phosphine ( PH₃ ), 5 ppm for silane ( SiH₄) and 0.05 ppm for diborane ( B₂H₆ ).

Such being the case,a harmful gas containing a concentrated hydride series gas as mentioned above, when being exhausted in the atmosphere, causes a danger of not only the environmental destruction but also a fatal accident leading to human death. In view of the above it is necessary, prior to exhausting a harmful gas in the atmosphere, to clean the same so that the concentration of the hydride gas in the harmful gas is lowered to its threshold limit values in time weighted average at the highest.

The gas cylinders for any of the above-mentioned hydride series gases in a production plant of a semiconductor or a liquid crystal are usually used in such a manner that the gas cylinders are connected to gas supply piping which leads to a production step of said production plant in a state of being housed in a container called a cylinder cabinet. It accomodates the cylinders for the purpose of preventing the gas when leaked, from directly polluting the outside atmosphere. It can not be said, however that there is by no means a danger that the gas leaks out in the atmosphere by an unexpected accident even if the cylinders are housed in such a cylinder cabinet. In an emergency of such an accident it is imperative that the harmful gas be immediately cleaned. There is also a danger of gas leakage from the production equipment and/or the gas supply piping in the production step, thereby polluting the environment of the production site. Thus it is also imperative in this case that the harmful gas be urgently cleaned. Moreover, a hydride gas is contained in an exhaust gas discharged from a production step using a hydride gas, and accordingly said gas contained therein needs to be cleaned prior to discharge into the atmosphere.

Both a wet cleaning method and a dry cleaning method are known as a method for cleaning a harmful gas containing any of these hydride series gases as a harmful component. There are known, as the wet cleaning method, a method in which a hydride series waste gas is brought into contact with an alkali solution and then is irradiated with ultraviolet ray for removing the harm (JP-A-3 178 317) , and a method in which a hydride series waste gas is brought into contact with an alkali solution and then ultrasonic waves are made to act thereupon for removing the harm (JP-A-3 178 318) and the like methods. There are known, as the dry cleaning method, a ① method for removing the harmful gas component by the use of a honeycomb molding comprising a compound of a metal such as copper, zinc and iron (JP-A-1 015 135) and a ② method for removing the harmful gas component by the use of a molding comprising manganese dioxide and copper as principal components as well as a silver compound (EP-A-0 309 099 and JP-B-7 100 128) .

In the case of cleaning a harmful gas when a harmful gas component such as arsine and phosphine leaks out to the atmosphere from piping or a cylinder for the gas or equipment in which the gas is used, it is required to promptly dispose of a high flow rate of such a harmful gas component with a high cleaning capacity. In this case, the harmful gas to be disposed of frequently contains moisture, since the hydride series gas leaking out to the atmosphere is cleaned together with air. In addition, it is desired in a production site from the viewpoint of safety to carry out the cleaning in the vicinity of the production equipment. Further, it is required to downsize the cleaning equipment in order to curtail the investment cost of said equipment. In addition, there has recently been steady rise in the amount of a hydride gas used in the manufacture of a semiconductor, and thus an enhanced cleaning performance is required also in cleaning a hydride gas-containing harmful gas discharged after being used in said manufacture.

However, the above-mentioned wet cleaning method involves the problems that a large sized installation is required because of the necessity for a supersonic wave generating unit or a ultraviolet ray generating unit; corrosion of the cleaning equipment is caused because of the use of an alkali solution; its cleaning capacity is poor; and the like problems. On the other hand with regard to the dry cleaning method, the method ① involves the problem that the cleaning capacity is liable to deterioration by the moisture in the air, thereby making it impossible to sufficiently clean the harmful gas in the presence of moisture. In addition, the method ② involves the problem that the cleaning capacity is not sufficiently enhanced, though it is less prone to be affected by the moisture in the air owing to the use of the cleaning agent composed of manganese dioxide, copper and silver.

Under such circumstances it has eagerly been desired to develop both a cleaning agent and a process for cleaning a harmful gas containing a hydride series gas that have enhanced cleaning capacity with a small sized installation without causing deterioration of the cleaning capacity even in the presence of moisture.

### SUMMARY OF THE INVENTION

As a result of intensive research and investigation made and accumulated by the present inventors in order to solve the above-mentioned problems, it has been found that exceptionally high cleaning capacity which has heretofore been unexpected, is obLainable by the use of a cleaning agent comprising manganese dioxide having a specific surface area by BET method of at least 150 m²/g and a silver compound, or comprising manganese dioxide having a specific surface area by BET method of at least 150 m²/g, a silver compound and a copper oxide. The present invention has been accomplished by the foregoing findings and information.

That is to say, the present invention is concerned with a cleaning agent to be used for the purpose of cleaning a harmful gas containing at least one member selected from the group consisting of arsine, phosphine, silane, disilane, trisilane, diborane, selenium hydride and dichlorosilane, said cleaning agent comprising manganese dioxide having a specific surface area by BET method of at least 150 m²/g and a silver compound as principal components, or comprising manganese dioxide having a specific surface area by BET method of at least 150 m²/g, a silver compound and a copper oxide as principal components.

The present invention is further concerned with a process for cleaning a harmful gas containing at least one member selected from the group consisting of arsine, phosphine, silane, disilane, trisilane, diborane, hydrogen selenide and dichlorosilane by bringing said harmful gas into contact with a cleaning agent comprising manganese dioxide having a specific surface area by BET method of at least 150 m²/g and a silver compound as principal components, or comprising manganese dioxide having a specific surface area by BET method of at least 150 m²/g, a silver compound and a copper oxide as principal components.

### BRIEF DESCRIPTION OF THE DRAWING

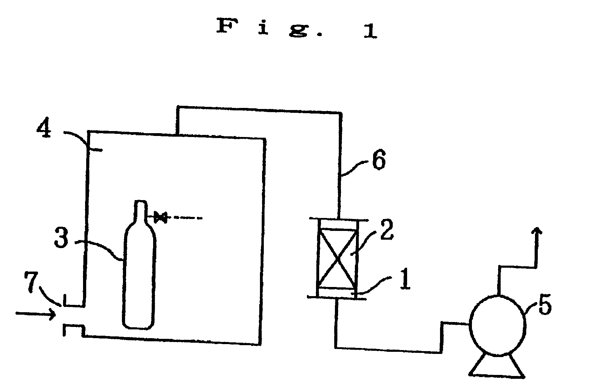

FIG.1 is a schematic drawing showing gas cleaning equipment for a gas leaking from a cylinder cabinet as an example of the embodiments of the cleaning process according to the present invention.

### DESCRIPTION OF THE PREFERRED EMBODIMENTS

The present invention relates to a cleaning agent comprising manganese dioxide having a specific surface area by BET method of at least 150 m²/g and a silver compound as principal components, or comprising manganese dioxide having a specific surface area by BET method of at least 150 m²/g, a silver compound and a copper oxide as principal components and also to a cleaning process by the use of said cleaning agent.

The manganese dioxide to be used in the cleaning agent and the cleaning method is manganese dioxide having a specific surface area by BET method of at least 150 m²/g ( hereinafter the manganese dioxide having a specific surface area by BET method of at least 150 m²/g is referred to as "manganese dioxide having a large specific surface area"). Preferably, the manganese dioxide having a large specific surface area has a specific surface area of at least 200 m²/g, especially in the range of 200 to 1,000 m²/g. Manganese dioxide having a specific surface area by BET method of less than 150 m²/g fails to afford a high cleaning capacity.

A method for preparing the manganese dioxide having a large specific surface area is exemplified by a synthesis method in which a dilute aqueous solution of potassium permanganate, a dilute aqueous solution of manganese sulfate and concentrated sulfuric acid are mixed by stirring under heating.

The silver compound is exemplified by silver oxide (I), silver oxide (II), and a silver salt (I) such as an inorganic acid salt of silver, an organic acid salt of silver and a halogenated silver. Examples of the inorganic acid salt of silver include silver carbonate, silver nitrate, silver nitrite, silver sulfate, silver sulfite, silver chlorate, silver perchlorate, silver bromate, silver iodate, silver hydrogenphosphate, silver phosphate, silver pyrophosphate, silver metaphosphate, silver tetrafluoroborate and silver hexafluoroborate. On the other hand, examples of the organic acid salt of silver include silver acetate and silver oxalate. Examples of the halogenated silver include silver fluoride, silver chloride, silver bromide and silver iodide. Any of the above-mentioned species may be used alone or in combination with at least one other. Among the above-exemplified silver compounds, silver oxide (I) and silver oxide (II) are particularly preferable.

By adding any of the above-mentioned silver compounds in the cleaning agent according to the present invention,sufficient cleaning capacity can be exerted even under the condition of much moisture being present such as in the atmosphere.

By the use of the cleaning agent comprising manganese dioxide having a large specific surface area along with any of the silver compounds, the cleaning capacity is sufficiently enhanced, and also by adding any of the copper oxides, the cleaning capacity is furthermore enhanced.

The copper oxide to be used for the cleaning agent in the present invention is exemplified by copper oxide (I) and copper oxide (II), and each of them may be used alone or in combination with each other.

Copper oxide (I) can be produced by an electrolytically synthetic process in which aqueous solution of commmon salt is used as an electrolyte and copper plates are used as electrodes, but copper oxide (I) having a purity of not less than 92 % is conveniently available in the market. Copper oxide (II) can be produced by oxidizing copper oxide (I) by heating the same, but copper oxide (II) having a purity of not less than 95 % is conveniently available in the market.

With regard to the compositional proportion in the cleaning agent comprising the manganese dioxide having a large specific surface area and the silver compound, when the ratio of the silver compound is unreasonably low,sufficient cleaning capacity is not achieved, whereas when the ratio thereof is unreasonably high, the cleaning agent is made expensive, thus failing to exhibit the cleaning capacity in proportion to the amount thereof to be ued. In view of the foregoing, the ratio of the manganese dioxide to the silver in the silver compound is in the range of usually 1:( 0.25 to 0.001 ) by weight, preferably 1: ( 0.15 to 0.005 ) by weight.

In the case where a copper oxide is added to the cleaning agent, the ratio of the manganese dioxide to the silver in the silver compound is in the range of usually 1: ( 0.25 to 0.001 ) by weight, preferably 1:( 0.15 to 0.005 ) by weight; and the ratio of the mixture to the copper oxide is 1: at most 10 , preferably 1: 1.2 or less. An excessively high ratio of the copper oxide leads to a decrease in the cleaning capacity.

The cleaning agent according to the present invention may be a molding of a mixture of the manganese dioxide having a large specific surface area and the silver compound, or a molding of a mixture of the manganese dioxide having a large specific surface area, the silver compound and the copper oxide. In addition, the cleaning agent may be a molding of the manganese dioxide having a large specific surface area to which the silver compound is further attached or a molding of the manganese dioxide having a large specific surface area and the copper oxide to which the silver compound is further attached.

A variety of methods are available as methods for preparing the cleaning agent of the present invention. These methods are exemplified by a method in which a slurry or a cake that is obtained by adding water to a preliminary mixture of the manganese dioxide, silver compound and copper oxide in a prescribed ratio and stirring the resultant water-containing mixture, is extrusion molded and cut into a proper length to form pellets, and the resultant pellets are dried to form the cleaning agent; a method in which the above-mentioned slurry or cake is crushed and the resultant crushed product is subjected to tabletting molding, followed by drying to form the cleaning agent; a method in which the above-mentioned slurry or cake is molded into the form of granule by the use of a granulating machine, followed by drying to form the cleaning agent. Of these methods, the extrusion molding for pelletizing is preferable from the aspects of workability and easiness of selecting the form, shape and size of the objective cleaning agent.

In the case of preparing the aforesaid molding from a starting raw material in the form of powder, slurry or cake, a binding agent may be added thereto in order to enhance the moldability or the mold strength. Any of an inorganic binding agent and an organic binding agent may be used as the binding agent, and is added to and kneaded with the powdery raw material at the time of preparing the cleaning agent. The amount of the binding agent to be added varies depending upon the proportion of each of the components, molding conditions, etc. and thus can not be unequivocally specified. The amount thereof, when being unreasonably small, results in failure to achieve the effect of the binding agent, whereas when being unreasonably large, lowers the cleaning capacity. In view of the foregoing, the amount of the binding agent to be used is usually 0.1 to 15 % by weight, preferably 0.5 to 7 % by weight based on the whole weight of the cleaning agent.

In the case of attaching and adding the silver compound to the molding of the manganese dioxide or to the molding of the manganese dioxide and the copper oxide to prepare the cleaning agent, any of a wet method and a dry method is acceptable. The wet method is exemplified by a method in which the silver compound in the form of aqueous slurry is added and attached to the molding, and a method in which a water-soluble silver compound is impregnated into the molding. The dry method is exemplified by a method in which the silver compound in the form of powder is applied to the whole surfaces of the molding of the manganese dioxide or to the whole surfaces of the molding of the manganese dioxide and the copper oxide to prepare the cleaning agent according to the present invention.

The size or shape of the cleaning agent is not limited in particular, but the shape thereof is exemplified by sphere, column, cylinder and granule. The size thereof is 0.5 to 10 mm in diameter in the case of spherical form, is preferably 0.5 to 10 mm, approximately in diameter and 2 to 20 mm, approximately in height in the case of columnar form such as pellet and tabulet and is 0.84 to 5.66 mm, approximately in a sieve opening in the case of irregular form such as granule. The packing density of the cleaning agent when it is packed in a cleaning column, varies depending upon the shape of the cleaning agent, and it is usually in the range of 0.5 to 2.0 g /mℓ, approx.

It is possible in the present invention to use the cleaning agent in a moving bed or a fluidized bed as well as a fixed bed, but it is usually used in a fixed bed. The cleaning agent is packed in a cleaning column, where the harmful gas introduced thereinto is cleaned while being brought into contact with the cleaning agent.

The packing length of the cleaning agent in the case of a fixed bed varies depending upon the flow rate of the gas, the concentrations of the harmful components in the harmful gas and the like. Thus, the packing length can not be unequivocally specified, but is usually set to 50 to 500 mm from the practical point of view. The inside diameter of the cleaninq column is determined by the gas velocity through the cleaning column, the pressure loss through the packed bed, the contact efficiency betweeen the gas and the packed bed and the like.

The concentrations of the harmful components in Lhe harmful gas capable of being cleaned according to the present invention, are not specifically limited. However, in the case where the harmful components have a high concentration, the heat of reaction caused by the reaction between the cleaning agent and the harmful components unfavorably .raise the temperature, thereby being accompanied by a danger. It is preferable in the case where the harmful components have a high concentration, to dilute the harmful gas to a concentration of not higher than 1 % by mixing the same with air, an inert gas, hydrogen, etc.

In case of leakage of a hydride gas-containing harmful gas from a gas cylinder, piping or equipment using a hydride gas, the leaked harmful gas is usually diluted with a suction blower which is installed for dilution, and subsequently is cleaned.

It is another purpose of installing a blower to forcibly direct the harmful gas in the cleaning column in case of leakage of the harmful components.

A blower having a ventilation capacity of 5 to 200 m²/min, approximately is frequently used for the aforesaid purpose. In the case where such a blower is used, the concentration of the harmful components in the harmful gas flowing out from the cleaning column is maintained at about 50 to 1000 ppm even in case of causing such a large amount of gas leakage that a gas cylinder available on the market is emptied during a period of time of 5 to 10 minutes.

As described hereinbefore, the harmful gas containing the harmful components is cleaned in the form of a mixture with a large amount of air in the present invention, and accordingly the present invention is put into practice in many cases under the conditions same as those of ordinary environment in the atmosphere, that is, at a relative humidity of 30 to 100 %. Even in such a case that contains moisture, the harmful gas containing the harmful components can sufficiently be cleaned without being influenced by carbon dioxide gas, etc. in the air.

Any of the harmful gas components is filled in a gas cylinder usually in a state of being diluted with such a gas as nitrogen and argon, and accordingly it is supplied to the production equipment for a semiconductor or a liquid crystal also in a state of being diluted with such a gas as nitrogen and argon. Such being the case, the nitrogen or argon gas coexits with the harmful component at the time of leakage, but the cleaning capacity according to the present invention is not lowered even in the presence of such a gas.

The temperature at which the harmful gas component is brought into contact with the cleaning agent is usually in the range of 0 to 90 °C, preferably around room temperature ( 10 to 40 °C ), whereby heating or cooling is not required. It goes without saying that the temperature after the start of contact therebetween indicates a temperature rise corresponding to the concentration of the harmful gas component, however the cleaning capacity is not lowered thereby.

The flow velocity of the harmful gas is not particularly limited, but in the case of cleaning a leaked harmful gas, the flow velocity falls within the range of 0.3 to 1.5 *m*/sec, approx. in terms of the superficial linear velocity ( LV ). In the case of cleaning a harmful gas discharged from a manufacturing step, the flow velocity falls within the range of 0.01 to 0.5 *m*/sec, approx. in terms of the superficial linear velocity ( LV ).

Although the pressure at which the harmful gas component is brought into contact with the cleaning agent is usually atmospheric pressure, it is possible to operate the cleaning equipment at reduced pressure or under pressure. The contact time is usually at least 0.01 sec., preferably at least 0.025 sec. A contact time shorter than 0.01 sec. sometimes leads to failure to achieve sufficient cleaning capacity.

One example of the embodiments according to the present invention is shown in FIG.1.

A cleaning column 1 which contains a cleaning agent in its packing section 2, is installed via a ventilation duct 6 between a cylinder cabinet 4 which accomodates a gas cylinder 3 and a blower 5 to be used for the purpose of continuously sucking the air inside of the cylinder cabinet 4 and ventilating the same. In the event of leakage of the gas from the gas cylinder 3 housed in the cylinder cabinet 4, the blower 5 which is installed on the downstream side of the cleaning column 1 is switched to a high flow-rate running mode. Thereby, the leaked harmful gas is introduced in the cleaning column 1 via the ventilation duct 6 along with a large amount of air sucked through an air take-in port 7. Thus the harmful gas is cleaned in the cleaning column 1 so as to be converted to a harmless gas, which is thereafter exhausted to the atmosphere.

The cleaning agent and the cleaning process according to the present invention are effective for cleaning a harmful gas containing at least one member selected from the group consisting of arsine, phosphine, silane, disilane, trisilane, diborane, hydrogen selenide and dichlorosilane.

According to the cleaning agent of the present invention, by virtue of the use of a specific manganese dioxide having a specific surface area by BET method of at least 150 m²/*g*, extremely high cleaning capacity can be assured which has never been foreseeable from the conventional cleaning agent comprising the previous manganese dioxide, copper oxide and silver oxide. Likewise, according to the cleaning process of the present invention, it is made possible to miniaturize the cleaning equipment by dispensing with a heating or cooling installation because of its having sufficient cleaning capacity even at around room temperature.

In the following, the present invention will be described in more detail with reference to comparative examples and working examples, which however shall not limit the present invention thereto.

### Example 1

### [ Preparation of manganese dioxide ]

To an aqueous solution of 398*g* of potassium permanganate in 12.5 kg of water was promptly added at 70 °C, the mixed solution of 8.46 kg of 3 % by weight of an aqueous solution of manganese sulfate and 144*g* of sulfuric acid to bring the mixed solution to reaction. The precipitate thus formed was stirred at 90 °C for 3 hours, then filtered, washed three times with 25 kg of deionized water, and again filtered to obtain 1200*g* of manganese dioxide in the form of cake. The manganese dioxide thus formed in the form of cake was dried at 90 °C for 12 hours to obtain 360*g* of manganese dioxide in the form of powder. A measurement was made of the specific surface area by BET method of the resultant manganese dioxide in the form of powder by means of a surface area and pore size analyzer( Autosorb 3 B, produced by Yuasa Ionics Co.,Ltd.). The result was 245 m²/*g*.

### [ Preparation of silver oxide(II)]

Silver nitrate in an amount of 102*g* was dissolved in water. Separately, 90*g* of caustic soda and 88*g* of potassium persulfate were each dissolved in 200*g* of deionized water heated up to 85 °C with stirring. While the mixed solution was continued to be heated and stirred, the above-prepared aqueous solution of silver nitrate was added dropwise thereto to deposit precipitate. The resultant precipitate was subjected to decantation and water washing repeatedly, and thereafter was dried under vacuum at 100 °C for 3 hours to form 70*g* of silver oxide (II) in the form of powder.

### [ Preparation of cleaning agent ]

To 340*g* of manganese dioxide in the form of powder were added 40*g* of silver oxide (II), 20*g* of powdery alumina and 150*g* of water, and the resultant mixture was kneaded. The mixed cake thus formed was extruded by means of an extruder to obtain a molded product of 1.6 mm in diameter. The resultant extrusion molded product was cut into pellets of 3 at 5 mm in length , approximately, which were dried under heating at 90 °C for 12 hours by means of a dryer to obtain 395*g* of a cleaning agent A having a silver content of 8.8 % by weight.

### [Test for cleaning capacity]

The resultant cleaning agent A was packed in a quartz made cleaning column having an inside diameter of 19 mm so as to constitute a packing length of 100 mm( packed amount of 28.3 mℓ, 22.6*g*). Then the cleaning agent A was subjected to capacity tesL by passing therethrough, the air at a temperature of 25 °C at a relative humidity of 60 % containing 500 ppm of phosphine at a flow rate of 12.7 ℓ /min ( equivalent to a superficial linear velocity in the column LV of 75 cm /sec ). A part of the gas at the outlet of the cleaning column was continuously sampled by the use of a gas detector( Model No.HD-1 ,produced by NIPPON SANSO CORPORATION.). At the same time, a measurement was made of the period of time until the concentration of the phosphine in the cleaned outlet gas increased to as high as 28 ppb ( effective treatment time) to determine the amount of the phosphine gas expressed in terms of pure phosphine which had been removed per one ℓ of the cleaning agent(cleaning capacity) . The result is given in Table 1.

### Example 2

### [ Preparation of manganese dioxide ]

To an aqueous solution of 398*g* of potassium permanganate in 6 kg of water was promptly added at 70 °C, the mixed solution of 4.23 kg of 6 % by weight of an aqueous solution of manganese sultate and 144*g* of sulfuric acid to bring the mixed solution to reaction. The precipitate thus formed was stirred at 90 °C for 3 hours, then filtered, washed three times with 12.5 kg of deionized water, and again filtered to obtain 1197*g* of manganese dioxide in the form of cake. The manganese dioxide thus formed in the form of cake was dried at 90 °C for 12 hours to obtain 358*g* of manganese dioxide in the form of powder. A measurement was made of the specific surface area by BET method of the resultant manganese dioxide in the form of powder by means of a surface area and pore size analyzer( Autosorb 3 B, produced by Yuasa Ionics Co.,Ltd.). The result was 183 m²/*g*.

### [ Preparation of cleaning agent and test for cleaning capacity ]

To 340*g* of the manganese dioxide in the form of powder having a specific surface area by BET method of 183 m²/*g* were added 40*g* of silver oxide (II) which had been prepared in the same manner as in Example 1, 20*g* of powdery alumina and 150*g* of water, and the resultant mixture was kneaded. Thereafter, the procedure in Example 1 was repeated to prepare 390*g* of a cleaning agent B.

The cleaning agent B thus obtained was subjected to the test for cleaning capacity in the same manner as in Example 1. The result is given in Table 1.

### Comparative Example 1

The procedure in Example 1 was repeated to prepare a cleaning agent C except that use was made of manganese dioxide ( guaranteed grade, produced by Kanto Chmical Co.,Ltd.) which had been subjected to a measurement of the specific surface area by BET method by the use of a surface area and pore size analyzer(Autosorb 3B, produced by Yuasa Ionics Co.,Ltd.) with the result of 48m²/*g*. The cleaning agent C thus obtained in an amount of 387*g* was subjected to the test for cleaning capacity under the conditions same as those in Example 1. The result is given in Table 1.

### Comparative Example 2

### [ Preparation of manganese dioxide ]

To an aqueous solution of 398*g* of potassium permanganate in 1.25 kg of water was promptly added at 70°C, the mixed solution of 846*g* of 3% by weight of an aqueous solution of manganese sulfate and 144*g* of sulfuric acid to bring the mixed solution to reaction. The precipitate thus fomed was stirred at 90°C for 3 hours, then filtered, washed three times with 2.5kg of deioniszed water, and again filtered to obtain 1100*g* of manganese dioxide in the form of cake. The manganese dioxide thus formed in the form of cake was dried at 90°C for 12 hours to obtain 358*g* of manganese dioxide in the form of powder. A measurement was made of the specific surface area by BET method of the resultant manganese dioxide in the form of powder by the use of a surface area and pore size analyzer ( Autosorb 3B , produced by Yuasa Ionics Co.,Ltd.). The result was 124 m²/g.

### [ Preparation of cleaning agent and test for cleaning capacity ]

The procedure in Example 1 was repeated except that use was made of 340g of the above-prepared manganese dioxide in the form of powder having a BET specific surface area of 124 m²/g. As a result, 392g of a cleaning agent D was obtained.

Subsequently the test for cleaning capacity of the cleaning agent D thus obtained was carried out in the same manner as in Example 1. The result is given in Table 1.

**Table 1**

| | BET specific surface area of MnO₂ (m²/g) | Harmful component | Effective treatment time (min) | Cleaning capacity (ℓ/ℓ cleaning agent) |
|---|---|---|---|---|
| Example 1 | 245 | phosphine | 112 | 25 |
| Example 2 | 183 | phosphine | 108 | 24 |
| Comparative-Example 1 | 48 | phosphine | 27 | 6 |
| Comparative Example 2 | 124 | phosphine | 30 | 7 |

### Examples 3 & 4

The cleaning agent A same as that in Example 1 was packed in each of two quartz made cleaning columns each having an inside diameter of 19 mm so as to constitute a packing length of 100 mm ( packed amount of 28.3 mℓ, 22.6g). Then measurements were made of each effective treatment time to determine the cleaning capacity in the same manner as in Example 1 by passing through the columns, the air at a temperature of 25°C at a relative humidity of 60 % containing phosphine by 1000 ppm ( Example 3 ) or 100 ppm ( Example 4 ) at a flow rate of 12.7 ℓ/min ( equivalent to a superficial linear velocity in the column of 75 cm / sec ). The results are given in Table 2.

### Example 5

The procedure in Example 1 was repeated by the use of the cleaning agent A to measure the effective treatment time and cleaning capacity except that the measurement was made by passing through the column, the air containing 500 ppm of phosphine at a flow rate of 20.4ℓ/min ( equivalent to a superficial linear velocity in the column of 120 cm / sec ). The results are given in Table 2.

**Table 2**

| | Concentration of phosphine (ppm) | Superficial velocity (cm/sec) | Effective treatment time(min) | Cleaning capacity (ℓ/ℓ cleaning agent) |
|---|---|---|---|---|
| Example 3 | 1000 | 75 | 45 | 20 |
| Example 4 | 100 | 75 | 580 | 26 |
| Example 5 | 500 | 120 | 45 | 20 |

### Examples 6 to 1 1

The cleaning agent A same as that in Example 1 was packed in each of six quartz made cleaning columns each having an inside diameter of 19 mm so as to constitute a packing length of 100 mm ( packed amount of 28.3 mℓ, 22.6g ). Then the cleaning agent was tested by passing through each of the columns, the air containing arsine ( Example 6 ), silane ( Example 7 ), disilane ( Example 8), trisilane ( Example 9 ), diborane ( Example 10 ) and hydrogen selenide ( Example 11 ), respectively each in an harmful gas concentration of 500 ppm at a flow rate of 12.7 ℓ/min ( equivalent to a superficial linear velocity in the column of 75 cm / sec ). A part of the gas at the outlet of each of the cleaning columns was continuously sampled by the use of a gas detector ( Model No.HD-1, produced by NIPPON SANSO CORPORATION ) for arsine and a detector ( Model TG-XA, produced by Bionics Instruments Co.,Ltd.) for silane, disilane, trisilane , diborane and hydrogen selenide. At the same time, measurements were made of the period of time until the concentration of the cleaned outlet gas was raised to as high as 22 ppb for arsine, 5 ppm for silane, 1 ppm for disilane and trisilane, 0.1 ppm for diborane and 0.05 ppm for hydrogen selenide effective treatment time ). The results are given in Table 3.

### Comparative Example 3

The cleaning agent C same as that used in Comparative Example 1 was packed in the same cleaning column as in Example 1. Thus a measurement was made of the effective treatment time to determine the cleaning capacity in the same manner as in Examples 6 to 11 by passing therethrough, the air containing arsine in a concentration of 500 ppm at a flow rate of 12.7 ℓ/min ( equivalent to a superficial linear velocity in the column of 75 cm / sec ). The results are given in Table 3.

**Table 3**

| | Harmful component | Effective treatment time (min) | Cleaning capavity (ℓ/ℓ cleaning agent |
|---|---|---|---|
| Example 6 | arsine | 219 | 50 |
| Example 7 | silane | 77 | 17 |
| Example 8 | disilane | 60 | 13 |
| Example 9 | trisilane | 55 | 12 |
| Example 10 | diborane | 107 | 24 |
| Example 11 | hydrogen selenide | 280 | 63 |
| Comparative Example 3 | arsine | 33 | 7 |

### Examples 12 & 13

To 320*g* of manganese dioxide in the form of powder and 20*g* of silver oxide (II) which had been prepared in the same manner as in Example 1 were added 20*g* of alumina in the form of powder and 150*g* of water, and the resultant mixture was kneaded. The mixed cake thus obtained was extruded by means of an extruder to obtain a molded product of 1.6 mm in diameter. The resultant extrusion molded product was cut into pellets of 3 to 5 mm in length, approximately, which were dried under heating at 90 °C for 12 hours by means of a dryer to obtain 352*g* of a cleaning agent E having a silver content of 4.9 % by weight. Subsequently, the above-mentioned procedure was repeated except that 4*g* of silver oxide (II) was used in place of 20*g* of the same. As a result, there was obtained 329*g* of a cleaning agent F having a silver content of 1.0 % by weight. The resultant cleaning agents E & F were subjected to the test for cleaning capacity in the same manner as in Example 1. The results are given in Table 4.

### Examples 14

To 320*g* of manganese dioxide in the form of powder which had been prepared in the same manner as in Example 1 were added 35*g* of silver oxide (I ) ( guaranteed grade, produced by Kanto Chemical Co.,Ltd.), 20*g* of alumina in the form of powder and 150g of water, and the resultant mixture was kneaded. The mixed cake thus obtained was extruded by means of an extruder to obtain a molded product of 1.6 mm in diameter. The resultant extrusion molded product was cut into pellets of 3 to 5 mm in length, approximately, which were dried under heating at 90 °C for 12 hours by means of a dryer to obtain 370*g* of a cleaning agent G having a silver content of 8.7 % by weight. Then, the cleaning agent G thus obtained was subjected to the test for cleaning capacity in the same manner as in Example 1. The result is given in Table 4.

### Examples 15 & 16

Manganese dioxide in the form of cake in an amount of 890*g* which had been prepared in the same manner as in Example 1 was extrusion molded by the use of an extruder to obtain an molded product of 1.6 mm in diameter. The resultant extrusion molded product was cut into pellets of 3 to 5 mm in length, approx. which were dried under heating at 90 °C for 12 hours by means of a dryer to obtain 313*g* of a manganese dioxide molding. To the resultant manganese dioxide molding was added a suspension prepared by suspending 40*g* of silver oxide (II) which had been prepared in the same manner as in Example 1 in 400*g* of water, followed by vigorous stirrig. Then the resultant mixture was dried under heating at 90 °C for 12 hours by means of a dryer to obtain 348*g* of a cleaning agent H having a silver content of 9.9 % by weight.

Subsequently the cleaning agent H thus obtained was packed in each of two quartz made cleaning columns same as that in Example 1, and then measurements were made of each effective treatment time to determine the cleaning capacity in the same manners as in Example 1, or Examples 6 to 11 by passing through the columns, the air containing 500 ppm of phosphine( Example 15 ) or 500 ppm of arsine ( Example 16 ) each at a flow rate of 12.7 ℓ/min ( equivalent to a superficial linear velocity in the column of 75 cm / sec ). The results are given in Table 4.

### Examples 17 & 18

Manganese dioxide molding in an amount of 300*g* which had been prepared in the same manner as in Examples 15 & 16 was impregnated with 300*g* of 15% aqueous solution of silver nitrate and was dried for 12 hours under heating at 90 °C by the use of a dryer to obtain 343*g* of a cleaning agent I having a silver content of 8.3 % by weight.

Subsequently the cleaning agent I thus obtained was packed in each of two quartz made cleaning columns same as that in Example 1, and then measurements were made of each effective treatment time to determine the cleaning capacity in the same manners as in Example 1, or Exampls 6 to 11 by passing through the columns, the air containing 500 ppm of phosphine ( Example 17 ) or 500 ppm of arsine ( Example 18 ) each at a flow rate of 12.7 ℓ /min ( equivalent to a superficial linear velocity in the column of 75 cm / sec ). The results are given in Table 4.

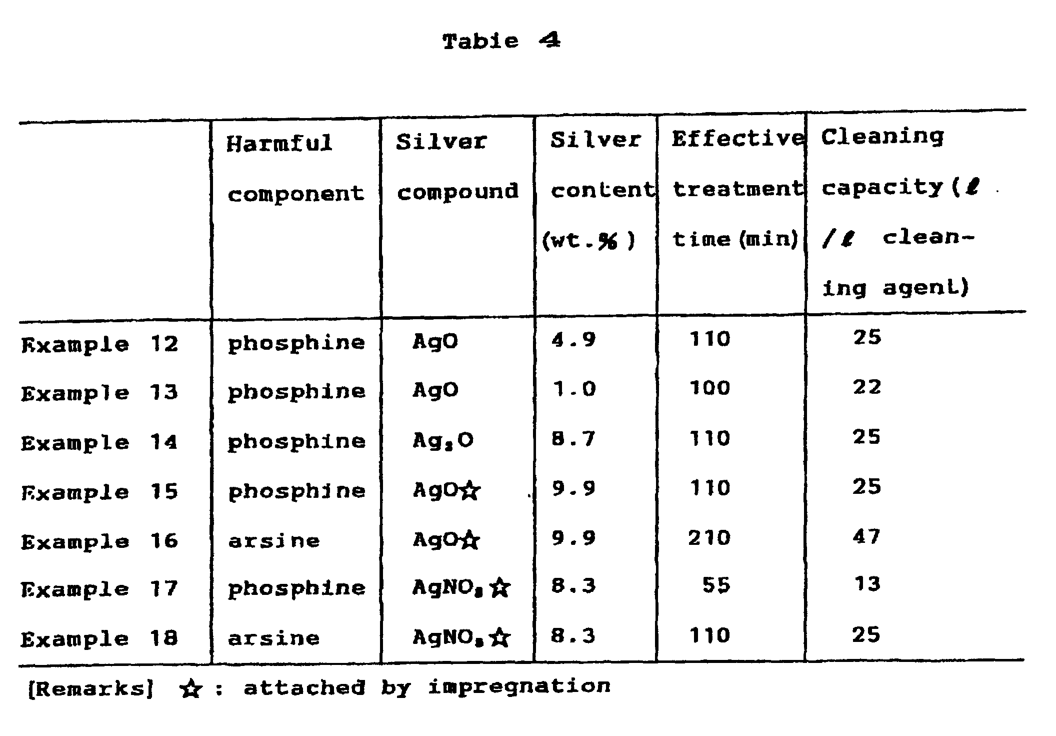

### Examples 1 9 to 21

To 170*g* of manganese dioxide in powder form and 40*g* of silver oxide (II) which had been prepared in the same manner as in Example 1 were added 170 *g* of copper oxide (II) ( guaranteed grade, produced by Kanto Chemical Co.,Ltd.), 20*g* of alumina in the form of powder and 150*g* of water. The resultant mixture was kneaded, and then in the same manner as in Example 1, was made into 393*g* of a cleaning agent J having a silver content of 8.8 % by weight.

Subsequently the cleaning agent J thus obtained was packed in each of three quartz made cleaning columns same as that in Example 1, and then measurements were made of each effective treatment time to determine the cleaning capacity in the same manner as in Example 1, by passing through the columns, the air containing phosphine by 500 ppm ( Example 19 ), 1000 ppm ( Example 20 ), and 100 ppm ( Example 21) each at a flow rate of 12.7 ℓ/min ( equivalent to a superficial linear velocity in the column of 75 cm / sec ). *The* results are given in Table 5.

### Example 22

The procedure in Example 1 was repeated except that use was made of the cleaning agent J same as that used in Examples 19 to 21 to measure the effective treatment time and the cleaning capacity, and that the measurement was made by passing through the column, the air containing 500 ppm of phosphine at a flow rate of 20.4 ℓ/min ( equivalent to a superficial linear velocity in the column of 120 cm / sec ). The results are given in Table 5.

### Example 23

The procedure in Examples 6 to 11 was repeated except that use was made of the cleaning agent J same as that used in Examples 19 to 21 to measure the effective treatment time and the cleaning capacity, and that the measurement was made by passing through the column, the air containing 500 ppm of arsine at a flow rate of 12.7 ℓ/min ( equivalent to a superficial linear velocity in the column of 75 cm/sec ). The results are given in Table 5.

### Comparative Examples 4 & 5

To 170*g* of manganese dioxide having a specific surface area by BET method of 48 m²/*g* which had been used in Comparative Example 1 were added 40*g* of silver oxide (II) which had been prepared in the same manner as in Example 1, 170*g* of copper oxide (II) ( guaranteed grade, produced by Kanto Chemical Co.,Ltd.), 20*g* of alumina in the form of powder and 150*g* of water. The resultant mixture was kneaded, and then in the same manner as in Example 1, was made into 385*g* of a cleaning agent K. Subsequently the cleaning agent K thus obtained was packed in each of two quartz made cleaning columns same as that in Example 1, and then measurements were made of each effective treatment time to determine the cleaning capacity in the same manners as in Example 1 or Examples 6 to 11, by passing through the columns, the air containing 500 ppm of phosphine ( Comparative Example 4 ) and 500 ppm of arsine ( Comparative Example 5 ), respectively, each at a flow rate of 12.7 ℓ/min ( equivalent to a superficial linear velocity in the column of 75 cm / sec). The results are given in Table 5.

**Table 5**

| | Harmful component | Conc. of harmful compoment (ppm) | Superficial velocity (cm/sec) | Effective treatment time (min) | Cleaning capacity (ℓ/ℓ cleaning agent) |
|---|---|---|---|---|---|
| Example19 | phosphine | 500 | 75 | 355 | 80 |
| Example20 | phosphine | 1000 | 75 | 155 | 70 |
| Example21 | phosphine | 100 | 75 | 1820 | 82 |
| Example22 | phosphine | 500 | 120 | 189 | 68 |
| Example23 | arsine | 500 | 75 | 710 | 160 |
| Comparative Example 4 | phosphine | 500 | 75 | 44 | 10 |
| Comparative Example 5 | arsine | 500 | 75 | 71 | 16 |
| [Remarks] Conc.: Concentration | | | | | |

### Example 24

The cleaning agent A same as that in Example 1 was packed in a quartz made cleaning column having an inside diameter of 19mm so as to constitute a packing length of 100mm ( packed amount of 28.3mℓ, 22.6*g* ). Then the cleaning agent A was subjected to capacity test by passing therethrough, the air containing 500 ppm of dichlorosilane at a flow rate of 12.7ℓ/min ( equivalent to a superficial linear velocity in the column -LV of 75 cm /sec). A part of the gas at the outlet of the cleaning column was continuously sampled by the use of a qas detector ( Model No. TG-XA, produced by Bionics Instruments Co.,Ltd.). At the same time, a measurement was made of the period of time until the concentration of the dichlorosilane in the cleaned outlet gas increased to as high as 5ppm ( effective treatment time ). The result is given in Table 6.

**Table 6**

| | Harmful component | Effective treatment time (min.) | Cleaning capacity (ℓ/ℓ cleaning agent) |
|---|---|---|---|
| Example 24 | dichlorosilane | 142 | 32 |

### Example 25

The cleaning agent A same as that in Example 1 was packed in a quartz made cleaning column having an inside diameter of 40mm so as to constitute a packing length of 100mm ( packed amount of 125.6mℓ, 100.4*g* ). Then the cleaning agent A was subjected to capacity test by passing therethrough, the air containing 2000 ppm of dichlorosilane at a flow rate of 2.0ℓ/min( equivalent to a superficial linear velocity in the column-LV of 2.65 cm/sec ). A part of the gas at the outlet of the cleaninq column was continuously sampled, and a measurement was made of the effective treatment time in the same manner as in Example 24. The result is given in Table 7.

**Table 7**

| | Harmful component | Conc.of harmful component (ppm) | Superficial velocity (cm/sec) | Effective treatment time (min) | Cleaning capacity (ℓ / ℓ cleaning agent |
|---|---|---|---|---|---|
| Example 25 | dichlorosilane | 2000 | 2.65 | 1100 | 35 |

## Claims

1. A cleaning agent for cleaning a harmful gas containing as a harmful component, at least one member selected from the group consisting of arsine, phoshine, silane, disilane, trisilane, diborane, hydrogen selenide and dichlorosilane, which cleaning agent comprises manganese dioxide having a specific surface area by BET method of at least 150 m²/*g* and a silver compound.

2. The cleaning agent for cleaning a harmful gas according to Claim 1, which further comprises a copper oxide.

3. The cleaning agent for cleaning a harmful gas according to Claim 1 or 2, wherein the manganese dioxide has a specific surface area by BET method of at least 200 m²/*g*.

4. The cleaning agent for cleaning a harmful qas according to Claim 1 or 2, wherein the silver compound is at least one member selected from the group consisting of silver oxide (I) and silver oxide (II).

5. The cleaning agent for cleaning a harmful gas according to Claim 1 or 2, which comprises a mixed molding of manganese dioxide having a specific surface area by BET method of at least 150 m²/*g* and a silver compound, or a molding of manganese dioxide having a specific surface area by BET method of at least 150 m²/*g*, which molding is incorporated with a silver compound attached onto the surfaces thereof.

6. The cleaning agent for cleaning a harmful gas according to Claim 1 or 2, wherein the ratio by weight of the manganese dioxide having a specific surface area by BET method of at least 150 m²/*g* to the silver in said silver compound is in the range of 1: 0.25 to 0.001.

7. The cleaning agent for cleaning a harmful gas according to Claim 2, wherein the ratio by weight of the mixture of the manganese dioxide having a specific surface area by BET method of at least 150 m²/*g* and the silver compound to the copper oxide is 1: at most 10.

8. The cleaning agent for cleaning a harmful gas according to Claim 2, which comprises a mixed molding of manganese dioxide having a specific surface area by BET method of at least 150 m²/*g*, a silver compound and a copper oxide, or a mixed molding of manganese dioxide having a specific surface area by BET method of at least 150 m²/*g* and a copper oxide, which mixed molding of said manganese dioxide and said copper oxide is incorporated with a silver compound attached onto the surfaces thereof.

9. A process for cleaning a harmful gas containing as a harmful component, at least one member selected from the group consisting of arsine, phoshine, silane, disilane, trisilane, diborane, hydrogen selenide and dichlorosilane, which process comprises bringing said harmful gas into contact with a cleaning agent which comprises manganese dioxide having a specific surface area by BET method of at least 150 m²/*g* and a silver compound.

10. The process for cleaning a harmful gas according to Claim 9, wherein said cleaning agent further comprises a copper oxide.

## Patentansprüche

1. Reinigungsmittel für die Reinigung eines schädlichen Gases, enthaltend als eine schädliche Komponente mindestens einen Vertreter, gewählt aus der Gruppe bestehend aus Arsin, Phosphin, Silan, Disilan, Trisilan, Diboran, Hydrogenselenid und Dichlorsilan, wobei das Reinigungsmittel Mangandioxid mit einer spezifischen Oberfläche nach dem BET-Verfahren von mindestens 150 m²/g und eine Silberverbindung umfasst.

2. Reinigungsmittel zum Reinigen eines schädlichen Gases gemäß Anspruch 1, welches weiterhin ein Kupferoxid umfasst.

3. Reinigungsmittel zum Reinigen eines schädlichen Gases gemäß Anspruch 1 oder 2, wobei das Mangandioxid eine spezifische Oberfläche nach dem BET-Verfahren von mindestens 200 m²/g besitzt.

4. Reinigungsmittel zum Reinigen eines schädlichen Gases gemäß Anspruch 1 oder 2, wobei die Silberverbindung mindestens ein Vertreter, gewählt aus der Gruppe bestehend aus Silberoxid (I) und Silberoxid (II), ist.

5. Reinigungsmittel zum Reinigen eines schädlichen Gases gemäß Anspruch 1 oder 2, welches ein gemischtes Formteil aus Mangandioxid mit einer spezifischen Oberfläche nach dem BET-Verfahren von mindestens 150 m²/g und einer Silberverbindung, oder ein Formteil aus Mangandioxid mit einer spezifischen Oberfläche nach dem BET-Verfahren von mindestens 150 m²/g umfasst, wobei das Formteil mit einer an dessen Oberflächen anhaftenden Silberverbindung eingebunden ist.

6. Reinigungsmittel zum Reinigen eines schädlichen Gases gemäß Anspruch 1 oder 2, wobei dos Gewichtsverhältnis des Mangandioxids mit einer spezifischen Oberfläche nach dem BET-Verfahren von mindestens 150 m²/g zu dem Silber in der Silberverbindung im Bereich von 1 : 0,25 bis 0,001 liegt.

7. Reinigungsmittel zum Reinigen eines schädlichen Gases gemäß Anspruch 2, wobei das Gewichtsverhältnis der Mischung aus dem Mangandioxid mit einer spezifischen Oberfläche nach dem BET-Verfahren von mindestens 150 m²/g und der Silberverbindung zu dem Kupferoxid 1 : höchstens 10 beträgt.

8. Reinigungsmittel zum Reinigen eines schädlichen Gases gemäß Anspruch 2, welches ein gemischtes Formteil aus Mangandioxid mit einer spezifischen Oberfläche nach dem BET-Verfahren von mindestens 150 m²/g, eine Silberverbindung und ein Kupferoxid oder ein gemischtes Formteil aus Mangandioxid mit einer spezifischen Oberfläche nach dem BET-Verfahren von mindestens 150 m²/g und einem Kupferoxid umfasst, wobei das gemischte Formteil aus dem Mangandioxid und dem Kupferoxid mit einer an dessen Oberflächen anhaftenden Silberverbindung eingebunden ist.

9. Reinigungsmittel für die Reinigung eines schädlichen Gases, enthaltend als schädliche Komponente mindestens einen Vertreter, gewählt aus der Gruppe bestehend aus Arsin, Phosphin, Silan, Disilan, Trisilan, Diboran, Hydrogenselenid und Dichlorsilan, wobei das Verfahren das Inkontaktbringen des schädlichen Gases mit einem Reinigungsmittel umfasst, welches Mangandioxid mit einer spezifischen Oberfläche nach dem BET-Verfahren von mindestens 150 m²/g und eine Silberverbindung umfosst.

10. Verfahren zum Reinigen eines schädlichen Gases gemäß Anspruch 9, wobei das Reinigungsmittel ferner ein Kupferoxid umfasst.

## Revendications

1. Agent de purification d'un gaz nocif contenant comme composant nocif, au moins un élément choisi dans le groupe consistant en arsine, phosphine, silane, disilane, trisilane, diborane, séléniure d'hydrogène et dichlorosilane, lequel agent de purification comprend du dioxyde de manganèse ayant une surface spécifique, suivant la méthode BET, au moins égale à 150 m²/g et un composé à base d'argent.

2. Agent de purification d'un gaz nocif selon la revendication 1, qui comprend en outre un oxyde de cuivre.

3. Agent de purification d'un gaz nocif selon la revendication 1 ou 2, dans lequel le dioxyde de manganèse a une surface spécifique, suivant la méthode BET, au moins égale à 200 m²/g.

4. Agent de purification d'un gaz nocif selon la revendication 1 ou 2, dans lequel le composé à base d'argent est au moins un élément choisi parmi le groupe consistant en oxyde d'argent (I) et oxyde d'argent (II).

5. Agent de purification d'un gaz nocif selon la revendication 1 ou 2, qui comprend un moulage mixte de dioxyde de manganèse ayant une surface spécifique, suivant la méthode BET, au moins égale à 150 m²/g et d'un composé à base d'argent, ou un moulage de dioxyde de manganèse ayant une surface spécifique, suivant la méthode BET, au moins égale à 150 m²/g, lequel moulage contient un composé à base d'argent fixé sur les surfaces de celui-ci.

6. Agent de purification d'un gaz nocif selon la revendication 1 ou 2, dans lequel le rapport en poids du dioxyde de manganèse ayant une surface spécifique, suivant la méthode BET, au moins égale à 150 m²/g sur l'argent, dans ledit composé à base d'argent, se situe dans la fourchette de 1 : 0,25 à 0,001.

7. Agent de purification d'un gaz nocif selon la revendication 2, dans lequel le rapport en poids du mélange de dioxyde de manganèse ayant une surface spécifique, suivant la méthode BET, au moins égale à 150 m²/g et du composé à base d'argent sur l'oxyde de cuivre est de 1 : au plus 10.

8. Agent de purification d'un gaz nocif selon la revendication 2, qui comprend un moulage mixte de dioxyde de manganèse ayant une surface spécifique, suivant la méthode BET, au moins égale à 150 m²/g, d'un composé à base d'argent et d'un oxyde de cuivre, ou un moulage mixte de dioxyde de manganèse ayant une surface spécifique, suivant la méthode BET, au moins égale à 150 m²/g, et d'un oxyde de cuivre, lequel moulage mixte dudit dioxyde de manganèse et dudit oxyde de cuivre contient un composé à base d'argent fixé sur les surfaces de celui-ci.

9. Procédé de purification d'un gaz nocif contenant comme composant nocif, au moins un élément choisi dans le groupe consistant en arsine, phosphine, silane, disilane, trisilane, diborane, séléniure d'hydrogène et dichlorosilane, lequel procédé comprend le fait d'amener ledit gaz nocif en contact avec un agent de purification qui comprend du dioxyde de manganèse ayant une surface spécifique, suivant la méthode BET, au moins égale à 150 m²/g et un composé à base d'argent.

10. Procédé de purification d'un gaz nocif selon la revendication 9, dans lequel ledit agent de purification comprend en outre un oxyde de cuivre.
